# EUROPEAN PATENT SPECIFICATION

(11) **EP 3 760 877 B1**
(45) Date of publication and mention of the grant of the patent: **05.04.2023**
(21) Application number: 18907874.4
(22) Date of filing: 28.02.2018
(51) Int. Cl.: F04D 29/58, F04D 29/00, F04D 25/06, F04D 25/08, H02K 1/14, H02K 9/06, H02K 11/215

(54) **ELECTRIC BLOWER, ELECTRIC VACUUM CLEANER AND HAND DRYER**
ELEKTRISCHES GEBLÄSE, ELEKTRISCHER STAUBSAUGER UND HANDTROCKNER
SOUFFLANTE ÉLECTRIQUE, ASPIRATEUR ÉLECTRIQUE ET SÈCHE-MAINS

(43) Date of publication of application: 06.01.2021
(73) Proprietor: Mitsubishi Electric Corporation, Tokyo 100-8310 (JP)
(72) Inventor: TSUCHIDA, Kazuchika, Tokyo 100-8310 (JP); HAMAZAKI, Mitsumasa, Fukaya-shi, Saitama 369-1295 (JP); ADACHI, Naho, Tokyo 100-8310 (JP); ONIHASHI, Takayuki, Tokyo 100-8310 (JP); NOMIYAMA, Yutaka, Tokyo 100-8310 (JP)
(74) Representative: Mewburn Ellis LLP
(86) International application number: PCT/JP2018/007414
(87) International publication number: WO 2019/167155

(56) References cited:
- WO-A1-2016/189763
- WO-A1-2017/175387
- JP-A- H08 196 470
- JP-A- 2006 104 976
- JP-A- 2006 299 808
- JP-A- 2012 067 659
- JP-A- 2016 211 533
- JP-U- S5 360 109
- JP-Y2- S5 641 119

## Description

### TECHNICAL FIELD

The present invention relates to an electric blower, an electric vacuum cleaner, and a hand drier.

### BACKGROUND ART

As a motor in an electric blower, a sensor-equipped single-phase motor may be used. In the sensor-equipped motor, a sensor for detecting a rotational position of a rotor is mounted on a stator. The sensor is disposed between two teeth of the stator so as to face an outer circumferential surface of the rotor (see, for example, patent reference 1).

### PRIOR ART REFERENCE

### PATENT REFERENCE

Patent Reference 1: Japanese Patent Application Publication No. H4-289759 (see FIG. 1)

JP S53 60109 U relates to an electric blower used for a vacuum cleaner or the like.

### SUMMARY OF THE INVENTION

### PROBLEM TO BE SOLVED BY THE INVENTION

However, due to heat generated by coils when the motor is driven, a member holding the sensor may deform, and a positional displacement of the sensor may occur. Thus, enhancement of heat dissipation characteristics of the motor is an issue.

The present invention is made to solve the above-described problem, and an object of the present invention is to enhance heat dissipation characteristics of the motor in the electric blower.

### MEANS OF SOLVING THE PROBLEM

An electric blower according to the present invention is provided in claim 1.

### EFFECTS OF THE INVENTION

According to the present invention, the first air path is provided outside the frame and the second air path is provided inside the frame, and an airflow generated by the moving blade is guided to the second air path. Thus, heat generated by the motor can be dissipated by the air flowing through the second air path. Therefore, the heat dissipation characteristics of the motor can be enhanced, and a positional displacement of the sensor due to deformation of a member holding the sensor can be suppressed.

### BRIEF DESCRIPTION OF THE DRAWINGS

FIG. 1 is a longitudinal sectional view illustrating an electric blower according to Embodiment 1.
FIG. 2 is a perspective view illustrating a moving blade according to Embodiment 1.
FIG. 3(A) is a view illustrating vanes of a stationary blade according to Embodiment 1, FIG. 3(B) is a side view illustrating the stationary blade, and FIG. 3(C) is a view illustrating air guide plates.
FIG. 4 is a cross sectional view illustrating a motor according to Embodiment 1.
FIG. 5 is a cross sectional view illustrating a part of the motor according to Embodiment 1.
FIG. 6 is a cross sectional view illustrating a structure for holding a sensor according to Embodiment 1.
FIG. 7 is a longitudinal sectional view illustrating the structure for holding the sensor according to Embodiment 1.
FIG. 8 is a longitudinal sectional view illustrating a desirable example of the structure for holding the sensor according to Embodiment 1.
FIG. 9 is a cross sectional view illustrating a state where the motor according to Embodiment 1 is fitted into a frame.
FIG. 10 is a schematic view illustrating a flow of air in the electric blower according to Embodiment 1.
FIGS. 11(A) and 11(B) are a side view and a front view illustrating an air guiding function by the stationary blade of the electric blower according to Embodiment 1.
FIG. 12 is a schematic view illustrating a case where a strength of sensor fixing portions is low.
FIG. 13 is a cross sectional view illustrating a state where a sensor is mounted on the sensor fixing portions according to a Modification of Embodiment 1.
FIG. 14 is a cross sectional view illustrating a state where the sensor is removed from the sensor fixing portions according to the Modification of Embodiment 1.
FIG. 15 is a cross sectional view illustrating cross sectional structures of first portions of the sensor fixing portions according to the Modification of Embodiment 1.
FIG. 16 is a cross sectional view illustrating cross sectional structures of second portions of the sensor fixing portions according to the Modification of Embodiment 1.
FIG. 17 is a longitudinal sectional view illustrating an electric blower according to Embodiment 2.
FIG. 18 is a longitudinal sectional view illustrating an electric blower according to Modification 1 of Embodiment 2.
FIG. 19 is a longitudinal sectional view illustrating an electric blower according to Modification 2 of Embodiment 2.
FIG. 20(A) is a cross sectional view illustrating a motor according to Embodiment 3, and FIG. 20(B) is a view illustrating a state where a stator core is expanded.
FIG. 21 is a cross sectional view illustrating a motor according to Modification 1 of Embodiment 3.
FIG. 22 is a cross sectional view illustrating a motor according to Modification 2 of Embodiment 3.
FIG. 23 is a cross sectional view illustrating a motor according to Modification 3 of Embodiment 3.
FIG. 24 is a cross sectional view for explaining another example of a tooth shape in each Embodiment.
FIG. 25 is a view illustrating an electric vacuum cleaner to which the electric blower according to any of the Embodiments and the Modifications is applicable.
FIG. 26 is a perspective view illustrating a hand drier to which the electric blower according to any of the Embodiments and the Modifications is applicable.

### MODE FOR CARRYING OUT THE INVENTION

Embodiments of the present invention will be described in detail below with reference to the drawings. In this regard, these embodiments do not limit the present invention.

### EMBODIMENT 1.

### (Configuration of Electric Blower 200)

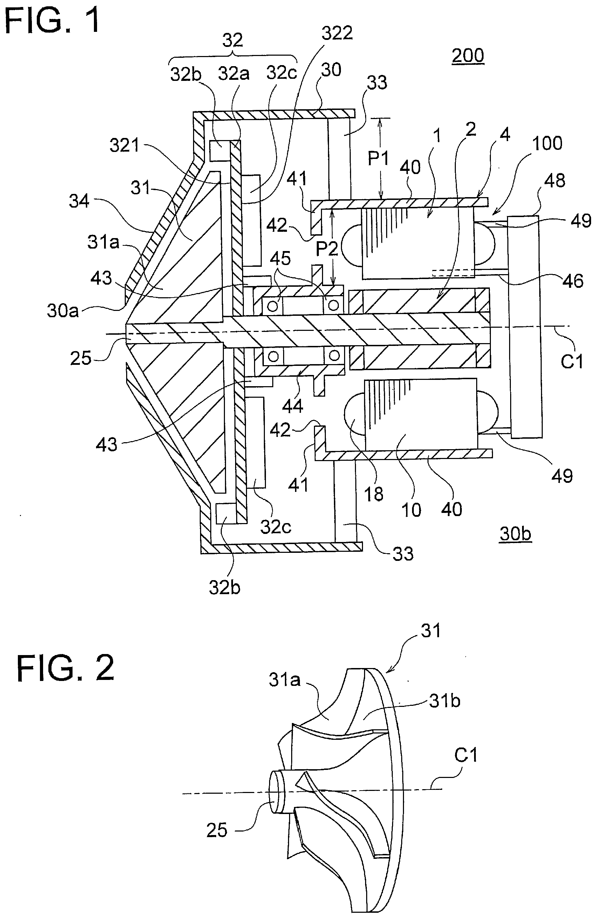

FIG. 1 is a longitudinal sectional view illustrating an electric blower 200 according to Embodiment 1 of the present invention. The electric blower 200 includes a motor 100 including a rotation shaft 25, a moving blade (fan) 31 mounted at one end side of the rotation shaft 25 of the motor 100, a stationary blade 32 disposed adjacent to the moving blade 31, and a housing 30 housing these components.

A direction of an axis C1 which is a central axis of the rotation shaft 25 will be referred to as an "axial direction" hereinafter. A circumferential direction about the axis C1 will be referred to as a "circumferential direction" hereinafter. A radial direction about the axis C1 will be referred to as a "radial direction" hereinafter. A sectional view taken along a section parallel to the axial direction will be referred to as a "longitudinal sectional view" hereinafter, and a sectional view taken along a section perpendicular to the axial direction will be referred to as a "cross sectional view" hereinafter.

The motor 100 is a permanent magnet synchronous motor and is a single-phase motor driven by an inverter. The motor 100 includes a motor frame (also simply referred to as a frame) 4, a stator 1 fixed in the motor frame 4, a rotor 2 disposed inside the stator 1, and the rotation shaft 25 fixed at a center of the rotor 2. A detailed structure of the motor 100 will be described later.

The motor frame 4 includes a motor housing portion (that is, a peripheral wall) 40, and a bearing housing portion 44 formed on the motor housing portion 40 on the moving blade 31 side. Both of the motor housing portion 40 and the bearing housing portion 44 have cylindrical shapes about the axis C1. The stator 1 of the motor 100 is fitted into the motor housing portion 40.

An outer diameter of the bearing housing portion 44 is smaller than that of the motor housing portion 40. A wall 41 is formed between the motor housing portion 40 and the bearing housing portion 44. In this case, the wall 41 extends in a direction perpendicular to the axis C1. Holes 42 that allow air to pass in the axial direction are formed in the wall 41.

Two bearings 45 (that is, bearing portions) are mounted in the bearing housing portion 44. The bearings 45 have outer rings fitted into the bearing housing portion 44, and inner rings to which the rotation shaft 25 is press-fitted. The two bearings 45 are distanced apart from each other in the axial direction. A sleeve or the like may be disposed between the two bearings 45. The rotation shaft 25 projects through a hole formed on the bearing housing portion 44.

FIG. 2 is a perspective view illustrating an example in which the moving blade 31 is implemented as a mixed-flow fan. The moving blade 31 illustrated in FIG. 2 includes a hub 31b having a conical shape about the axis C1, and a plurality of vanes 31a arranged on a surface of the hub 31b. The moving blade 31 has an inclination with respect to the axial direction, and generates an airflow directed outward in the radial direction. The moving blade 31 is not limited to the mixed-flow fan, and may be, for example, a turbofan.

With reference to FIG. 1 again, the stationary blade 32 includes a disk-shaped main plate 32a, a plurality of vanes 32b formed on a first surface 321 of the main plate 32a on the moving blade 31 side, and a plurality of air guide plates 32c formed on a second surface 322 of the main plate 32a opposite to the moving blade 31. The stationary blade 32 is fixed to the motor frame 4 by stationary blade support portions 43. In this example, a plurality of stationary blade support portions 43 are arranged at equal intervals in the circumferential direction about the axis C1.

The stationary blade support portions 43 may be fixed to an end of the bearing housing portion 44, as illustrated in FIG. 1, or may extend to the wall 41. A separate member for flow-rectifying, strength enhancement or the like may be disposed between the stationary blade 32 and the motor frame 4, and the stationary blade 32 may be fixed to the motor frame 4 via the separate member. The stationary blade 32 is fixed by, for example, bonding or screwing fastening.

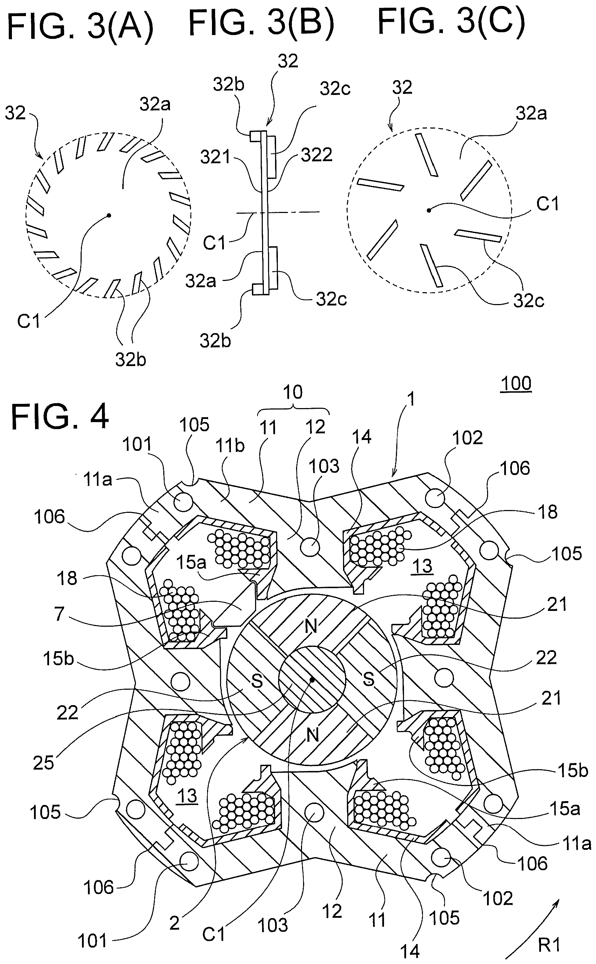

FIG. 3(A) is a view illustrating shapes and arrangement of the vanes 32b of the stationary blade 32. FIG. 3(B) is a side view of the stationary blade 32. FIG. 3(C) is a view illustrating shapes and arrangement of the air guide plates 32c of the stationary blade 32. In this regard, FIGS. 3(A) and 3(C) illustrate the shapes and arrangement as seen from the moving blade 31 side.

The vanes 32b are arranged at equal intervals in the circumferential direction, and each vane 32b extends in a direction inclined with respect to the radial direction, as illustrated in FIGS. 3(A) and 3(B). The vanes 32b are formed in an outer circumferential region of the first surface 321, and located on an outer side of the moving blade 31 (FIG. 2) in the radial direction. The vanes 32b function to rectify an airflow generated by the rotation of the moving blade 31.

The air guide plates 32c are arranged at equal intervals in the circumferential direction, and each air guide plate 32c extends in a direction inclined with respect to the radial direction, as illustrated in FIGS. 3(B) and 3(C). The direction in which the air guide plate 32c is inclined is opposite to that in which the vane 32b is inclined. The air guide plates 32c extend inward in the radial direction with respect to the vanes 32b. The air guide plates 32c function to direct the airflow, which is rectified by the vanes 32b, inward in the radial direction, and guide the airflow to the motor 100 side.

With reference to FIG. 1 again, the electric blower 200 has a cantilever structure in which the rotation shaft 25 is supported by the two bearings 45 provided between the moving blade 31 and the rotor 2. The number of bearings 45 is not limited to two, and may be three or more.

The housing 30 includes a fan cover 34 formed along the moving blade 31, and a suction port 30a facing a center of the moving blade 31 in the radial direction. The housing 30 further includes support portions 33 supporting the motor frame 4. In this example, a plurality of support portions 33 are provided in a radial pattern about the axis C1. The housing 30 opens on the side opposite to the fan cover 34 to form an exhaust port 30b.

The electric blower 200 includes a first air path P1 provided outside the motor frame 4, and a second air path P2 provided inside the motor frame 4. The first and second air paths P1 and P2 are paths (that is, air paths) through which air flowing into the housing 30 from the suction port 30a flows. Air flowing through the first air path P1 is directly exhausted from the exhaust port 30b. Air flowing through the second air path P2 passes through the motor 100 in the axial direction.

The stator 1 and the rotor 2, which are airflow resistors, are disposed in the second air path P2 inside the motor frame 4. Therefore, the first air path P1 provided outside the motor frame 4 and exhibiting a low airflow resistance is used as a main air path.

A sectional area of the first air path P1 is a sectional area (more specifically, a sectional area in a plane perpendicular to the axis C1) of a space between the housing 30 and the motor frame 4. A sectional area of the second air path P2 is a sectional area of an internal space of the motor frame 4, but is smaller than the sectional area of the first air path P1 since the stator 1 and the rotor 2 are provided in the second air path P2.

A board 48 for controlling driving of the motor 100 is disposed on a side of the motor 100 opposite to the moving blade 31. The board 48 is fixed to the motor frame 4 or the stator 1 by fixing members 49. The board 48 includes a sensor guide 46 for guiding lead wires of a sensor 7 (to be described later) of the motor 100.

### (Configuration of Motor 100)

FIG. 4 is a sectional view illustrating the motor 100 according to Embodiment 1. The motor 100 includes the rotor 2, and the stator 1 surrounding the rotor 2, as described above. The rotor 2 rotates clockwise in FIG. 4 about the axis C1. The direction in which the rotor 2 rotates is indicated by an arrow R1.

The rotor 2 includes the rotation shaft 25, and permanent magnets 21 and 22 fixed to a circumference of the rotation shaft 25. The permanent magnets 21 and 22 are arranged at equal intervals in the circumferential direction, and each of the permanent magnets 21 and 22 forms a magnetic pole. An outer circumferential surface of each permanent magnet 21 is, for example, a north pole, and an outer circumferential surface of each permanent magnet 22 is, for example, a south pole. However, the magnetic poles of the permanent magnets 21 and 22 may be reversed.

In this example, two permanent magnets 21 and two permanent magnets 22 are alternately arranged in the circumferential direction. That is, the rotor 2 has four magnetic poles. However, the number of magnetic poles of the rotor 2 is not limited to four, and need only be two or more.

The stator 1 is disposed on an outer side of the rotor 2 in the radial direction via an air gap. The stator 1 includes a stator core 10, insulating portions 14, and coils 18. The stator core 10 is formed of a plurality of stack elements stacked in the axial direction and fixed together at crimping portions 101, 102, and 103. In this case, the stack elements are electromagnetic steel sheets, and each stack element has a sheet thickness of, for example, 0.25 mm.

The stator core 10 includes a yoke 11 surrounding the rotor 2, and a plurality of teeth 12 extending from the yoke 11 toward the rotor 2 (that is, inward in the radial direction). The teeth 12 are arranged at equal intervals in the circumferential direction. The number of teeth 12 is equal to the number of magnetic poles of the rotor 2, and is four in this example.

The stator core 10 includes slots 13 each of which is formed between two teeth 12 adjacent to each other in the circumferential direction. Insulating portions 14 formed of an insulating resin are provided in the slots 13. The coils 18 are wound around the teeth 12 via the insulating portions 14.

In the example illustrated in FIG. 4, the yoke 11 of the stator core 10 includes a plurality of arc-shaped back yokes 11a, and linear connecting yokes 11b located on an inner side of the back yokes 11a in the radial direction. The back yokes 11a are outermost portions of the stator 1 in the radial direction, and are arranged at equal intervals in the circumferential direction.

The number of back yokes 11a is equal to the number of teeth 12, and is four in this example. The teeth 12 are each located between two back yokes 11a adjacent to each other in the circumferential direction. Outer circumferential surfaces of the back yokes 11a are fitted to an inner circumferential surface of the motor housing portion 40 of the motor frame 4 (FIG. 1).

The connecting yokes 11b extend to connect the back yokes 11a and the teeth 12 to each other. In this example, each connecting yoke 11b linearly extends so that the connecting yoke 11b is displaced inward in the radial direction as a distance from the back yoke 11a increases. The tooth 12 extends toward the rotor 2 from a portion (that is, an innermost portion of the yoke 11 in the radial direction) in which two connecting yokes 11b adjacent to each other in the circumferential direction are connected in a V-shape.

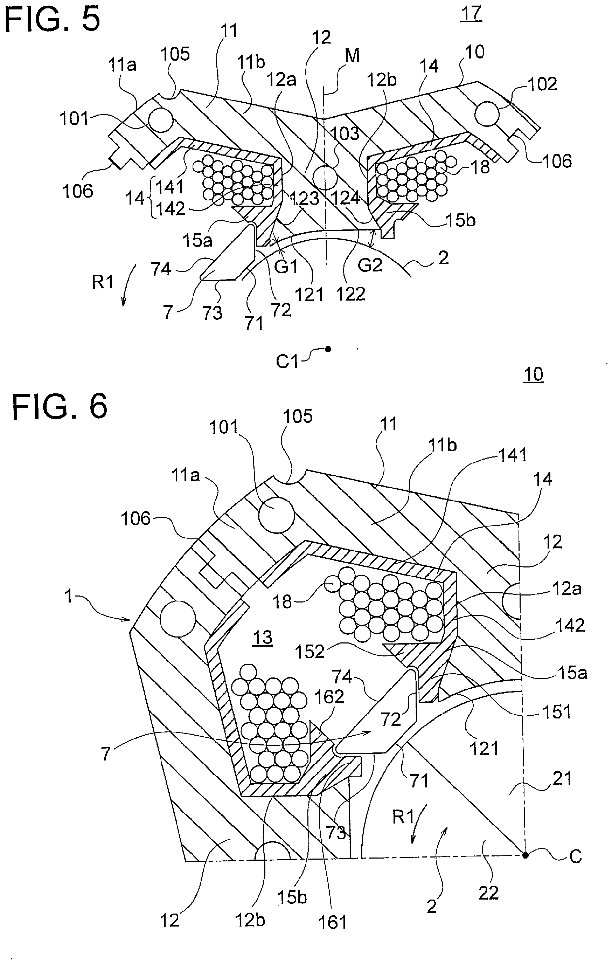

A split surface (split fitting portion) 106 is formed at a center of each back yoke 11a in the circumferential direction. The stator core 10 is divided at split surfaces 106 formed in the back yokes 11a into a plurality of blocks, that is, split cores 17 (FIG. 5) each of which includes the tooth 12. In this example, the stator core 10 is divided into four split cores 17.

Each split surface 106 includes a convex portion or a concave portion. The concave portion of the split surface 106 of one of two split cores 17 adjacent to each other in the circumferential direction is fitted into the concave portion of the split surface 106 of the other of the two split cores 17.

The stator core 10 is integrally fixed at the crimping portions 101, 102, and 103. The crimping portions 101 and 102 are formed on the yoke 11, and the crimping portions 103 are formed on the teeth 12. The crimping portions 101 and 102 are desirably formed at positions as close to the split surfaces 106 as possible on the yoke 11, that is, formed on the back yokes 11a.

Fixing recesses 105, which are grooves elongated in the axial direction, are formed on the outer circumferences of the back yokes 11a of the yoke 11. In a state where the stator core 10 is engaged with the motor housing portion 40 (FIG. 1) of the motor frame 4, parts of the motor housing portion 40 are deformed by being pressed from the outer circumferential side, and fitted into the fixing recesses 105. This prevents rotation of the stator 1 in the motor frame 4. A structure having no fixing recesses 105 is also employable.

FIG. 5 is an enlarged view illustrating a part of the stator 1. The tooth 12 includes a first side surface portion 12a which is a downstream end edge of the tooth 12 in the rotating direction (indicated by the arrow R1) of the rotor 2, and a second side surface portion 12b which is an upstream end edge of the tooth 12 on the upstream side in the rotating direction of the rotor 2. Both of the first side surface portion 12a and the second side surface portion 12b extend parallel to a straight line M in the radial direction passing through the center of the tooth 12 in the circumferential direction (that is, a middle position between the side surface portions 12a and 12b in the circumferential direction).

An inner end portion (to be referred to as an end portion hereinafter) of the tooth 12 in the radial direction has a shape asymmetrical with respect to the straight line M. In particular, an end edge of the tooth 12 facing the rotor 2 includes a first end edge 121 located on the downstream side of the rotating direction of the rotor 2, and a second end edge 122 located on the upstream side in the rotating direction of the rotor 2.

The first end edge 121 is curved in an arc shape along the outer circumferential surface of the rotor 2, and the second end edge 122 extends linearly. The first end edge 121 and the second end edge 122 are continuous with each other at the center of the tooth 12 in the circumferential direction. Therefore, a distance between the tooth 12 and the rotor 2 is larger on the upstream side (distance G2) than on the downstream side (distance G1) in the rotating direction of the rotor 2.

An inclined portion 123 is formed between the first end edge 121 and the first side surface portion 12a. An inclined portion 124 is formed between the second end edge 122 and the second side surface portion 12b. The inclined portions 123 and 124 are inclined so that an interval therebetween increases inward in the radial direction. A boundary between the first side surface portion 12a and the inclined portion 123 is at a position farther from the axis C1 than a boundary between the second side surface portion 12b and the inclined portion 124.

The insulating portion 14 includes an inner wall 141 extending along the inner surface of the yoke 11, and a side wall 142 surrounding a periphery (that is, the side surface portions 12a and 12b and two end surfaces in the axial direction) of the tooth 12. The insulating portions 14 are formed by integrally molding a resin with the stator core 10, or fitting a resin compact molded as a separate component onto the stator core 10.

Sensor fixing portions 15a and 15b are provided on both sides of the end portion of the tooth 12 in the circumferential direction. The sensor fixing portion 15a is provided on the first side surface portion 12a side, and the sensor fixing portion 15b is provided on the second side surface portion 12b side. The sensor fixing portions 15a and 15b project in the circumferential direction from the end portion of the tooth 12. In this example, the sensor fixing portions 15a and 15b are formed integrally with the insulating portion 14.

More specifically, the sensor fixing portions 15a and 15b are formed to be connected to the side wall 142 of the insulating portion 14. The inner wall 141 and the side wall 142 of the insulating portion 14, and the sensor fixing portion 15a (or the sensor fixing portion 15b) define a region in which the coils 18 in the slot 13 are disposed.

With reference to FIG. 4 again, the sensor fixing portions 15a and 15b face each other between two teeth 12 adjacent to each other in the circumferential direction. In this example, the stator 1 includes four pairs of sensor fixing portions 15a and 15b. A sensor 7 for detecting a magnetic field generated by the rotor 2 is held between one pair of sensor fixing portions 15a and 15b among the four pairs of sensor fixing portions 15a and 15b of the stator 1.

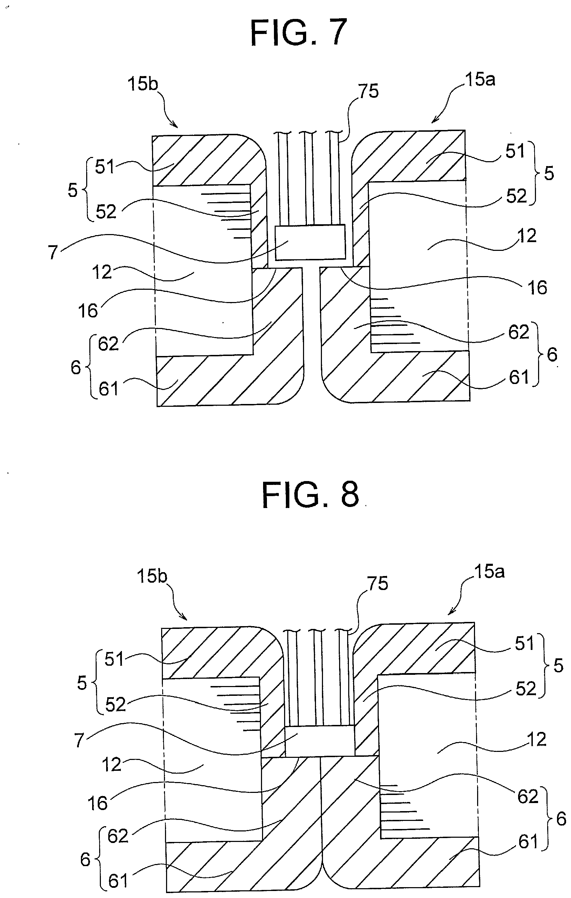

FIG. 6 is a cross sectional view for explaining a structure for holding the sensor 7 by the sensor fixing portions 15a and 15b. The sensor 7 is formed by a Hall effect element integrated with a resin package, and lead wires 75 (FIG. 7) are drawn from one end surface of the sensor 7 in the axial direction. In order to detect a magnetic field generated by the rotor 2, the sensor 7 is disposed to face the outer circumferential surface of the rotor 2. The sensor 7 has a trapezoidal shape in a plane perpendicular to the axial direction. More specifically, the sensor 7 includes a facing surface 71 facing the rotor 2, a back surface 74 opposite to the facing surface 71, and side surfaces 72 and 73 on both sides in the circumferential direction. The side surfaces 72 and 73 are inclined with respect to each other so that an interval therebetween increases outward in the radial direction.

The sensor fixing portions 15a and 15b project in the circumferential direction into the slot 13. The sensor fixing portion 15a includes a holding portion 151 facing the side surface 72 of the sensor 7, and a holding portion 152 facing the back surface 74 of the sensor 7. Similarly, the sensor fixing portion 15b includes a holding portion 161 facing the side surface 73 of the sensor 7, and a holding portion 162 facing the back surface 74 of the sensor 7.

The sensor 7 is inserted between the sensor fixing portions 15a and 15b, and fixed by fitting. A position of the sensor 7 in the circumferential direction and the radial direction is determined by the holding portions 151 and 152 of the sensor fixing portion 15a and the holding portions 161 and 162 of the sensor fixing portion 15b.

The sensor fixing portions 15a and 15b are formed integrally with the insulating portion 14 in this example, but this embodiment is not limited to such a configuration. The sensor fixing portions 15a and 15b may be formed as separate bodies from the insulating portion 14.

FIG. 7 is a longitudinal sectional view illustrating a structure for holding the sensor 7 by the sensor fixing portions 15a and 15b. In FIG. 7, the axial direction represents the vertical direction, and the circumferential direction represents the horizontal direction. In particular, with respect to the teeth 12, the board 48 (FIG. 1) side is defined as an upper side, and its opposite side is defined as a lower side.

Each of the sensor fixing portions 15a and 15b includes a first portion 5 and a second portion 6 in the axial direction. The first portion 5 includes a first end portion 51 covering an end surface (an upper surface in FIG. 7) of the tooth 12 in the axial direction, and a first side portion 52 covering a side surface of the tooth 12. The second portion 6 includes a second end portion 61 covering an end surface (a lower surface in FIG. 7) of the tooth 12 in the axial direction, and a second side portion 62 covering the side surface of the tooth 12.

In each of the sensor fixing portions 15a and 15b, the sectional area in a plane perpendicular to the axial direction is larger (in other words, a thickness is thicker) in the second side portion 62 than in the first side portion 52. More specifically, the amount of projection of the second side portion 62 from the tooth 12 in the circumferential direction is larger than that of the first side portion 52.

Thus, a space (that is, an insertion space) into which the sensor 7 is inserted is formed between the first side portions 52 of the sensor fixing portions 15a and 15b. The sensor 7 inserted into the insertion space is held by upper surfaces (referred to as sensor mounting surfaces 16) of the second side portions 62 of the sensor fixing portions 15a and 15b. The lead wires 75 of the sensor 7 are drawn through the insertion space and connected to the board 48 (FIG. 1).

In this manner, each of the sensor fixing portions 15a and 15b is formed by the first portion 5 and the second portion 6 having different sectional areas perpendicular to the axial direction, and the insertion space for inserting the sensor 7 is provided on the first portions 5 having the smaller sectional area. Thus, an entire rigidity of each of the sensor fixing portions 15a and 15b is higher as compared to the case where the thickness of each of the sensor fixing portions 15a and 15b is entirely thin.

FIG. 8 is a longitudinal sectional view illustrating a desirable configuration example of a structure for holding the sensor 7 by the sensor fixing portions 15a and 15b. In the configuration example illustrated in FIG. 8, the first side portions 52 of the sensor fixing portions 15a and 15b sandwich the sensor 7 with no space on the both sides of the sensor 7. The second side portions 62 of the sensor fixing portions 15a and 15b abut against each other. In this configuration example, a positional displacement of the sensor 7 in the circumferential direction is surely prevented.

Each of the sensor fixing portions 15a and 15b is divided into two parts, i.e., the first portion 5 and the second portion 6 in FIGS. 7 and 8, but the first portion 5 and the second portion 6 may be formed as one integrated body. In other words, each of the sensor fixing portions 15a and 15b need only include portions having different sectional areas perpendicular to the axial direction, on both sides of the mounting surface (that is, the sensor mounting surface 16) for the sensor 7.

When the motor 100 is assembled, the insulating portion 14 and the sensor fixing portions 15a and 15b are mounted onto each split core 17 (FIG. 5). Then, the coils 18 are wound around the insulating portions 14, and then four split cores 17 are combined with each other to obtain the stator 1. The sensor 7 is inserted between the sensor fixing portions 15a and 15b between two teeth 12.

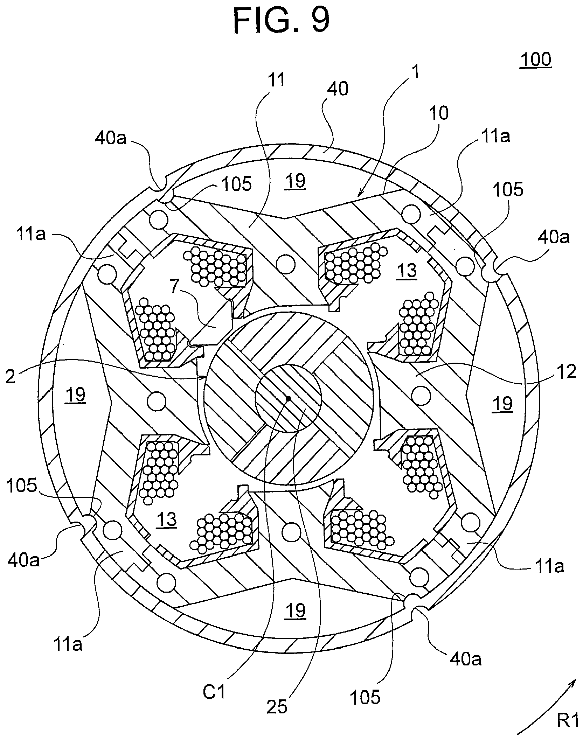

FIG. 9 is a view illustrating a state where the motor 100 is mounted in the motor frame 4 (FIG. 1). When the motor 100 is mounted in the motor housing portion 40, the outer circumferential surfaces of the back yokes 11a of the stator 1 are fitted to the inner circumferential surface of the motor housing portion 40. Since the stator 1 includes the fixing recesses 105, portions (indicated by reference numerals 40a) of the motor housing portion 40 corresponding to the fixing recesses 105 are recessed by application of external force, and the portions 40a are engaged with the fixing recesses 105. This makes it possible to prevent a positional displacement of the motor 100 in the circumferential direction.

### (Function)

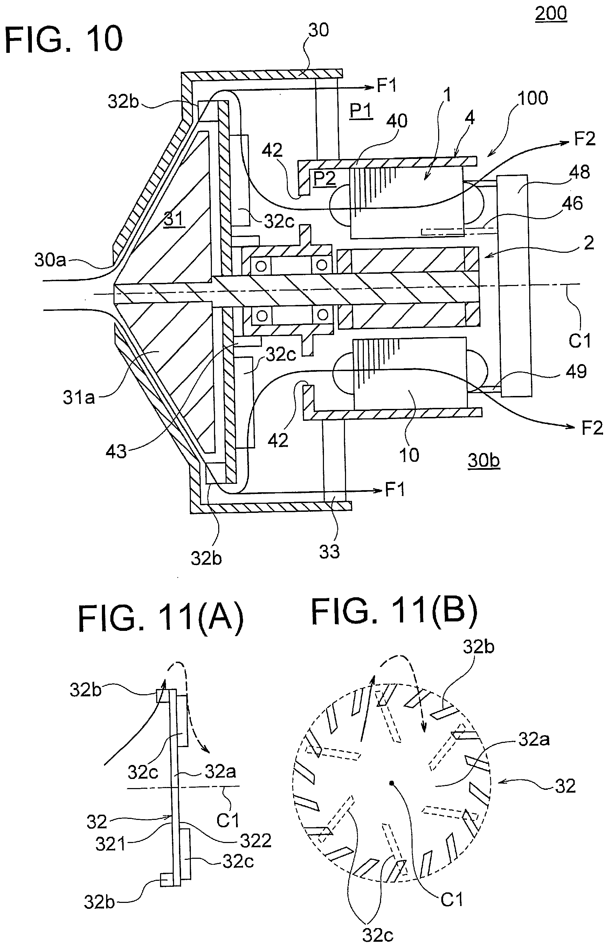

Next, a function of the electric blower 200 according to the Embodiment 1 will be described. FIG. 10 is a view illustrating an airflow in the electric blower 200. When the motor 100 is rotated by applying current to the coils 18, the rotation shaft 25 rotates, and the moving blade 31 rotates. When the moving blade 31 rotates, air flows into the housing 30 through the suction port 30a.

FIG. 11(A) is a side view illustrating a function of the stationary blade 32, and FIG. 11(B) is a front view illustrating the function as seen from the moving blade 31 side. As illustrated in FIGS. 11(A) and 11(B), the vanes 32b of the stationary blade 32 rectify air (indicated by solid arrows) flowing along the moving blade 31, and guide the air outward in the radial direction. The air guide plates 32c of the stationary blade 32 guide the air passing through the vanes 32b inward in the radial direction, as indicated by dashed arrows.

Therefore, a part of the air passing through the stationary blade 32 flows in the axial direction through the first air path P1 provided outside the motor frame 4, as indicated by arrows F1 in FIG. 10. Another part of the air passing through the stationary blade 32 is guided inward in the radial direction by the air guide plates 32c of the stationary blade 32, flows into the motor frame 4 through the holes 42, and flows through the second air path P2 in the axial direction, as indicated by arrows F2.

The air flowing into the motor frame 4 flows in the axial direction through gaps 19 between the stator 1 and the motor housing portion 40 illustrated in FIG. 9, the interior of each slot 13 in the stator 1, and the air gap between the stator 1 and the rotor 2. Therefore, heat generated by the coils 18 when the motor 100 is driven can be efficiently dissipated by the air.

When the rotor 2 rotates, an airflow occurs in the circumferential direction due to friction with the surface of the rotor 2, and circulates through the slot 13, and thus heat generated by the coils 18 can easily be dissipated. However, when the sensor 7 is mounted between two teeth 12 as described above, the sensor 7 closes the slot 13, and thus heat generated by the coils 18 is more likely to be accumulated in the slot 13.

In this Embodiment 1, since the air flows through the slots 13 of the motor 100 in the axial direction, heat generated by the coils 18 can be dissipated even via the slot 13 in which the sensor 7 is mounted. It is, therefore, possible to prevent a positional displacement of the sensor 7 due to thermal deformation of the sensor fixing portions 15a and 15b.

In Embodiment 1, since the stator core 10 is formed by combination of the split cores 17 (FIG. 5), an operation for fitting the insulating portions 14 and the sensor fixing portions 15a and 15b and an operation for winding the coils 18 are easier as compared to when the stator core 10 is formed of an integrated core. Therefore, even when the motor 100 is downsized, it is possible to wind the coils 18 at a high density and to enhance the positioning accuracy of the sensor 7.

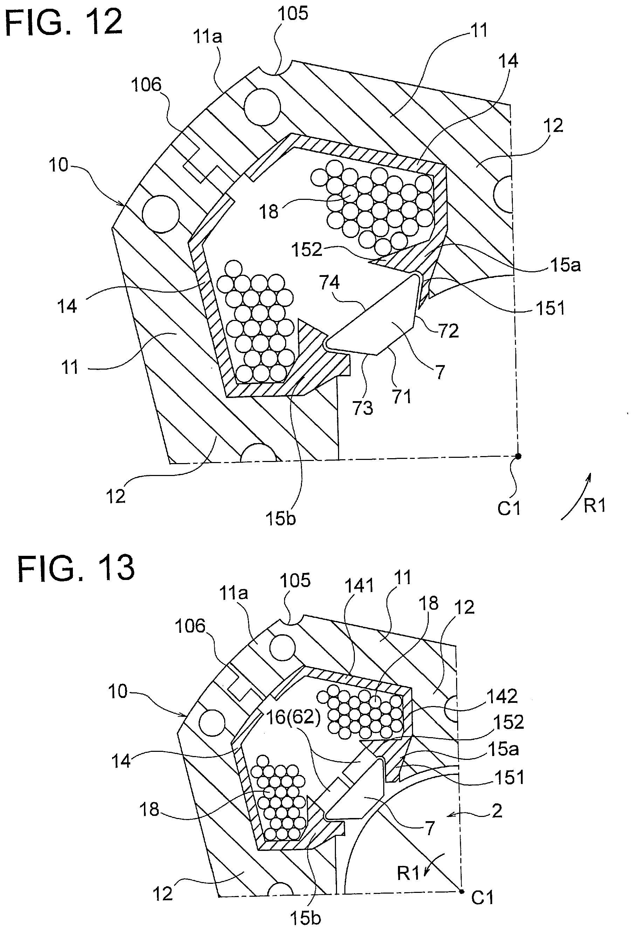

In some cases, a force may act on the sensor fixing portions 15a and 15b when the coils 18 are wound on the stator core 10. Accordingly, when the thickness of each of the sensor fixing portions 15a and 15b is entirely thin, the sensor fixing portions 15a and 15b may deform, as illustrated in, for example, FIG. 12. In contrast, since each of the sensor fixing portions 15a and 15b is formed by the first portion 5 and the second portion 6 which is thicker (that is, larger in sectional area) than the first portion 5, it is possible to obtain a rigidity and to prevent deformation.

### (Effects of Embodiment)

As described above, in Embodiment 1, the first air path P1 is provided outside the motor frame 4 and the second air path P2 is provided inside the motor frame 4, and a part of air flowing into the housing 30 is guided to the second air path P2. Therefore, heat generated by the coils 18 when the motor 100 is driven can be dissipated by the air flowing through the second air path P2.

In particular, even in the slot 13 in which the sensor 7 is mounted and heat is less likely to be dissipated, heat can be effectively dissipated by air passing through this slot 13 in the axial direction. This makes it possible to prevent a positional displacement of the sensor 7 due to thermal deformation of the sensor fixing portions 15a and 15b, and to enhance the reliability of the electric blower 200.

Since the sectional area of the first air path P1 is larger than that of the second air path P2, air in an amount required to dissipate heat from the motor 100 can be guided into the motor frame 4, and the remaining air can be directly exhausted and used for air blowing or the like.

Since the air guide plates 32c on the stationary blade 32 are provided, an airflow generated by the moving blade 31 can be efficiently guided to the second air path, and heat dissipation characteristics of the motor 100 can be enhanced.

Since the sensor fixing portions 15a and 15b for holding the sensor 7 are provided between two teeth 12 adjacent to each other in the circumferential direction, the sensor 7 can be positioned and held at a position facing the outer circumferential surface of the rotor 2. In particular, since the sensor fixing portions 15a and 15b are formed integrally with the insulating portion 14 (that is, a coil winding member), the positioning accuracy of the sensor 7 can be enhanced even in the compact motor 100.

Each of the sensor fixing portions 15a and 15b includes the first portion 5 and the second portion 6 aligned in the axial direction, the sectional area of the first portion 5 perpendicular to the axial direction is smaller than the sectional area of the second portion 6 perpendicular to the axial direction, and the sensor 7 is inserted between the first portions 5. Thus, the rigidity of the entire sensor fixing portions 15a and 15b can be obtained, and deformation of the sensor fixing portions 15a and 15b can be prevented.

### Modification.

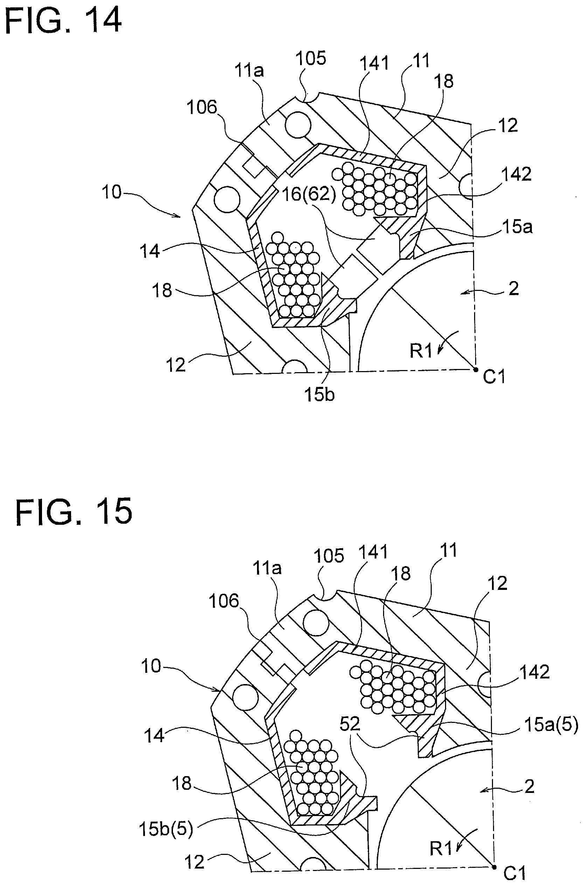

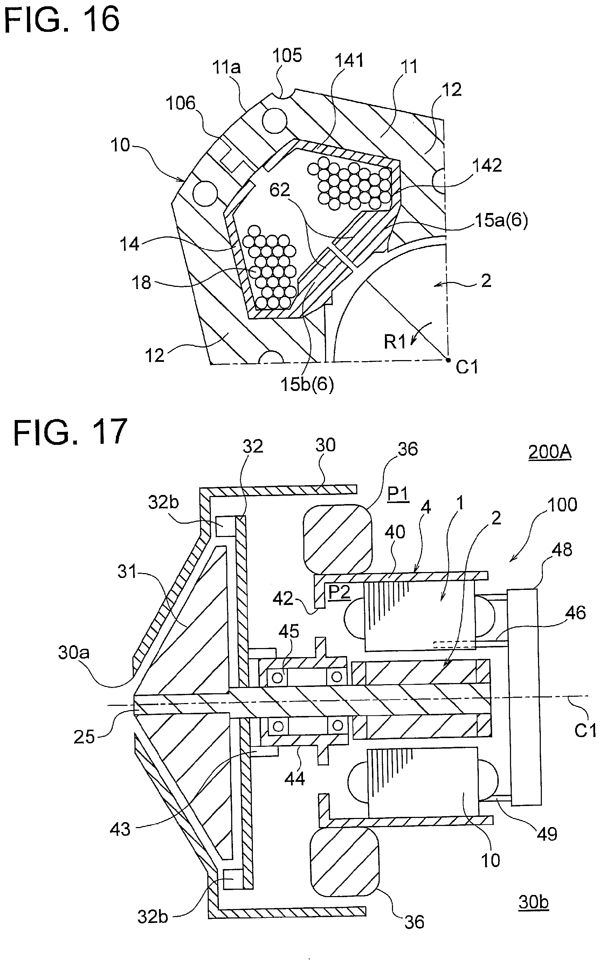

FIG. 13 is a sectional view illustrating a structure for holding a sensor 7 by sensor fixing portions 15a and 15b according to a Modification of Embodiment 1. FIG. 14 is a sectional view illustrating a state in which the sensor 7 is removed from the sensor fixing portions 15a and 15b. FIG. 15 is a sectional view illustrating cross-sectional structures of the first side portions 52 (FIG. 7) of the sensor fixing portions 15a and 15b. FIG. 16 is a sectional view illustrating cross-sectional structures of the second side portions 62 (FIG. 7) of the sensor fixing portions 15a and 15b.

Each of the sensor fixing portions 15a and 15b includes the first portion 5 and the second portion 6 aligned in the axial direction, as described above with reference to FIG. 7. In this Modification, structures of the second side portions 62 (that is, portions located between adjacent teeth 12) of the second portions 6 is different from those in Embodiment 1. Sensor mounting surfaces 16 which are upper surfaces of the second side portions 62 project outward in the radial direction with respect to the sensor 7, as illustrated in FIGS. 13 and 14.

The first side portions 52 of the sensor fixing portions 15a and 15b in the Modification are the same as those in Embodiment 1, as illustrated in FIG. 15. In contrast, the second side portions 62 of the sensor fixing portions 15a and 15b in the Modification project outward in the radial direction with respect to those in Embodiment 1, and have sectional areas perpendicular to the axial direction larger than those in Embodiment 1, as illustrated in FIG. 16. Other structures are the same as in Embodiment 1.

In this Modification, since the sectional areas of the second side portions 62 of the sensor fixing portions 15a and 15b are made larger, the rigidity of the sensor fixing portions 15a and 15b can be enhanced, and deformation of the sensor fixing portions 15a and 15b can be prevented.

### EMBODIMENT 2.

Embodiment 2 of the present invention will be described next. FIG. 17 is a longitudinal sectional view illustrating an electric blower 200A according to Embodiment 2. In the electric blower 200A according to Embodiment 2, the stationary blade 32 includes no air guide plates 32c. Instead, an airflow resistor 36 that provides resistance to an airflow (that is, that increases a pressure loss) is provided in the first air path P1. The airflow resistor 36 acts as an air guide member for guiding air, which flows into the housing 30 by the moving blade 31, to the second air path P2.

The airflow resistor 36 is fixed to an outer circumferential surface of the motor frame 4, and a clearance is formed between the airflow resistor 36 and an inner circumferential surface of the housing 30. The airflow resistor 36 may have any form as long as the airflow resistor 36 provides resistance to the airflow through the first air path P1. A porous body is desirable in order not to completely cut off the airflow. In addition, when the airflow resistor 36 is formed of a porous elastic body such as a sponge, the airflow resistor 36 can be fixed so as to be wound around the outer circumferential surface of the motor frame 4, and thus assembling is facilitated. Therefore, it is desirable to use, for example, a soundproofing material as the airflow resistor 36.

When the moving blade 31 rotates by driving of the motor 100, air flows into the housing 30 via the suction port 30a. Since the airflow resistor 36 is disposed in the first air path P1, a large part of the air passing through the stationary blade 32 flows toward the second air path P2, and enters the motor frame 4 through the holes 42. Thus, air passes through the motor 100 in the axial direction, and heat generated by the motor 100 is dissipated.

The electric blower 200A according to Embodiment 2 is configured in the same manner as the electric blower 200 according to Embodiment 1, except that the stationary blade 32 has no air guide plates 32c and the airflow resistor 36 is provided in the first air path P1 in Embodiment 2.

In Embodiment 2, the airflow resistor 36 in the first air path P1 guides air flowing into the housing 30 to the second air path P2, and thus heat generated by the coils 18 when the motor 100 is driven can be efficiently dissipated by the air flowing through the second air path P2, as in Embodiment 1.

### Modification 1.

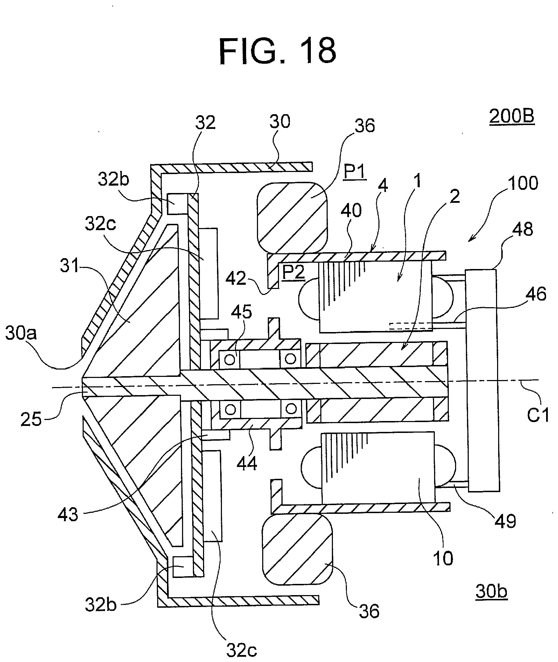

FIG. 18 is a longitudinal sectional view illustrating an electric blower 200B according to Modification 1 of Embodiment 2. In this Modification 1, the air guide plates 32c described in Embodiment 1 are added to the stationary blade 32. The air guide plates 32c of the stationary blade 32 are configured to guide air passing through the vanes 32b of the stationary blade 32 inward in the radial direction, and further guide the air to the second air path P2, as described in Embodiment 1. Other structures are the same as those of the electric blower 200A (FIG. 17) according to Embodiment 2.

In this Modification 1, air flowing into the housing 30 is guided to the second air path P2 by the air guide plates 32c of the stationary blade 32 and the airflow resistor 36 in the first air path P1. Therefore, air passing through the interior of the motor frame 4 increases, and thus the heat dissipation characteristics of the motor 100 can be enhanced.

### Modification 2.

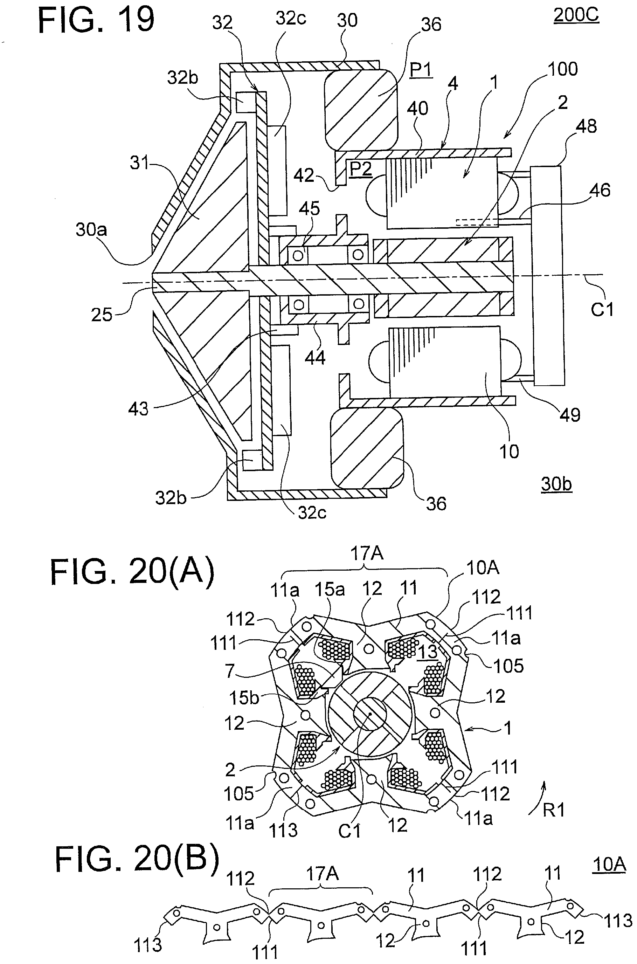

FIG. 19 is a longitudinal sectional view illustrating an electric blower 200C according to Modification 2 of Embodiment 2. In this Modification 2, an airflow resistor 36 made of a porous body is disposed to close a space between the outer circumferential surface of the motor frame 4 and the inner circumferential surface of the housing 30. Other structures are the same as those of the electric blower 200B (FIG. 18) according to Modification 1 of Embodiment 2.

Since the airflow resistor 36 is made of a porous body, air passes through the airflow resistor 36. Therefore, although the airflow resistor 36 is disposed to close the space between the outer circumferential surface of the motor frame 4 and the inner circumferential surface of the housing 30, the first air path P1 is not completely closed.

Also in this Modification 2, air flowing into the housing 30 is guided to the second air path P2 by the air guide plates 32c of the stationary blade 32 and the airflow resistor 36 in the first air path P1. Therefore, air passing through the interior of the motor frame 4 increases, and the heat dissipation characteristics of the motor 100 can thus be enhanced.

An example in which the air guide plates 32c are provided on the stationary blade 32 is shown in FIG. 19, but an arrangement in which no air guide plate 32c is provided on the stationary blade 32 as illustrated in FIG. 17 may also be employed.

### EMBODIMENT 3.

Embodiment 3 of the present invention will be described next. FIG. 20(A) is a cross sectional view illustrating a motor according to Embodiment 3. The motor 100 (FIG. 4) according to the above described Embodiment 1 includes a stator core 10 formed by a combination of a plurality of split cores 17. In contrast, the motor according to this Embodiment 3 includes a stator core 10A formed by a combination of a plurality of joint cores 17A connected to each other via thin portions 112.

As illustrated in FIG. 20(A), separating surfaces 111 and thin portions 112 are formed on three back yokes 11a among four back yokes 11a of the stator core 10A, in place of the spit surfaces 106 described in Embodiment 1 (FIG. 4). Each separating surface 111 extends from the inner circumference toward the outer circumference of the back yoke 11a, but does not reach the outer circumference of the back yoke 11a. Deformable thin portions (that is, connecting portions) 112 are formed between the terminal ends of the separating surfaces 111 and the outer circumferences of the back yokes 11a. Crimping portions may be provided in place of the thin portions 112.

Welding surfaces (that is, bonding surfaces) 113 are formed on one of the four back yokes 11a of the stator core 10A. The welding surfaces 113 extend from the inner circumference toward the outer circumference of the back yoke 11a, and reach the outer circumference of the back yoke 11a.

In the stator core 10A, each of blocks divided by the separating surfaces 111 and the thin portions 112 (or the welding surfaces 113) is referred to as a joint core 17A. In this example, the stator core 10A includes four joint cores 17A each including one tooth 12.

FIG. 20(B) is a schematic view illustrating a state where the stator core 10A is expanded into a strip. The stator core 10A can be expanded into a strip as illustrated in FIG. 20(B) by deforming the thin portions 112 from the state illustrated in FIG. 20(A). The joint cores 17A are connected to each other via the thin portions 112 and are aligned in a row. The welding surfaces 113 are located at both ends of the row.

In an assembling process of the motor, in a state where the joint cores 17A are expanded into a strip (FIG. 20(B)), the insulating portions 14 (including the sensor fixing portions 15a and 15b) are fitted onto the joint cores 17A. Thereafter, the coils 18 are wound around the insulating portions 14, and then the joint cores 17A are curved in an annular shape, and the welding surfaces 113 are welded together to obtain the stator core 10A. The sensor 7 is then mounted on the sensor fixing portions 15a and 15b between two teeth 12. Other structures of the stator core 10A are the same as those of the stator core 10 described in Embodiment 1.

In the motor according to this Embodiment 3, the stator core 10A is formed of the joint cores 17A, and thus an operation for fitting the insulating portions 14 and the sensor fixing portions 15a and 15b, and an operation for winding the coils 18 are easier as compared to when the stator core 10A is formed of an integrated core. Therefore, even if the motor 100 is downsized, the coils 18 can be wound at a high density and a position accuracy of the sensor 7 can be enhanced.

### Modification 1.

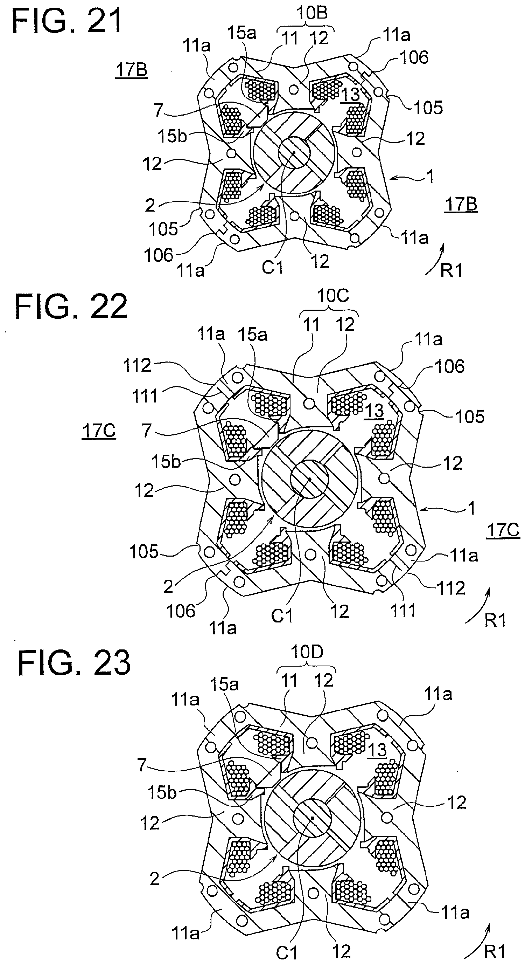

FIG. 21 is a cross sectional view illustrating a motor according to Modification 1 of Embodiment 3. The motor (FIG. 20(A)) according to the above-described Embodiment 3 includes the stator core 10A formed by a combination of the plurality of joint cores 17A each including one tooth 12. In contrast, the motor according to Modification 1 includes a stator core 10B formed by a combination of a plurality of split cores 17B each including two teeth 12.

As illustrated in FIG. 21, two back yokes 11a among four back yokes 11a of the stator core 10B are provided with the split surfaces 106 described in Embodiment 1 (FIG. 4), and the remaining two back yokes 11a are provided with no split surfaces 106. The back yokes 11a provided with the split surfaces 106 and the back yokes 11a provided with no split surfaces 106 are alternately arranged in the circumferential direction.

In the stator core 10B, each of blocks divided by the split surfaces 106 is referred to as a split core 17B. In this example, the stator core 10B includes two split cores 17B each including two teeth 12.

In an assembling process of the motor, the insulating portions 14 (including the sensor fixing portions 15a and 15b) are fitted onto the split cores 17B. Thereafter, coils 18 are wound around the insulating portions 14, and then two split cores 17B are combined with each other to obtain the stator core 10B. The sensor 7 is then mounted on the sensor fixing portions 15a and 15b between two teeth 12. Other structures of the stator core 10B are the same as those of the stator core 10 described in Embodiment 1. Also in this Modification 1, the same effect as that of Embodiment 3 can be obtained.

### Modification 2.

FIG. 22 is a cross sectional view illustrating a motor according to Modification 2 of Embodiment 3. The motor (FIG. 20(A)) according to the above-described Embodiment 3 includes the stator core 10A formed by a combination of the plurality of joint cores 17A. In contrast, the motor according to Modification 2 includes the stator core 10C formed by a combination of split cores and joint cores.

As illustrated in FIG. 22, two back yokes 11a among four back yokes 11a of the stator core 10C are provided with the split surfaces 106 described in Embodiment 1 (FIG. 4), and the remaining two back yokes 11a are provided with the separating surfaces 111 and the thin portions 112 described in Embodiment 3 (FIG. 20). The back yokes 11a provided with the split surfaces 106 and the back yokes 11a provided with the separating surfaces 111 and the thin portions 112 are alternately arranged in the circumferential direction.

In the stator core 10C, each of blocks divided by the split surfaces 106 will be referred to as a split core 17C. In this example, the stator core 10C includes two split cores 17C each including two teeth 12. Each split core 17C is expandable at its center in the circumferential direction by the thin portion 112.

In an assembling process of the motor, in a state where the split cores 17C are expanded into a strip, the insulating portions 14 (including the sensor fixing portions 15a and 15b) are fitted onto the split cores 17C. Thereafter, the coils 18 are wound around the insulating portions 14, and then two split cores 17C are combined with each other to obtain the stator core 10C. The sensor 7 is then mounted on the sensor fixing portions 15a and 15b between two teeth 12. Other structures of the stator core 10C are the same as those of the stator core 10 described in Embodiment 1. Also in this Modification 2, the same effect as that of Embodiment 3 can be obtained.

### Modification 3.

FIG. 23 is a cross sectional view illustrating a motor according to Modification 3 of Embodiment 3. The motor (FIG. 20(A)) according to the above-described Embodiment 3 includes the stator core 10A formed by a combination of the plurality of joint cores 17A. In contrast, the motor according to Modification 4 includes a stator core 10D having an integrated structure.

As illustrated in FIG. 23, the stator core 10D is provided with neither the split surfaces 106 described in Embodiment 1 (FIG. 4), nor the separating surfaces 111 and the thin portions 112 described in Embodiment 3 (FIG. 20). It is thus necessary to fit the insulating portions 14 and the sensor fixing portions 15a and 15b onto the annular stator core 10D, and to wind the coils 18 on the annular stator core 10D. Other structures of the stator core 10D are the same as those of the stator core 10 described in Embodiment 1.

The stator cores 10 to 10D each including four teeth 12 have been described in the above-described Embodiments and Modifications, but it is sufficient that the number of teeth is two or more. Furthermore, the yoke 11 of each of the stator cores 10 to 10D includes the back yokes 11a and the connecting yokes 11b in the above description, but may be formed as an annular yoke.

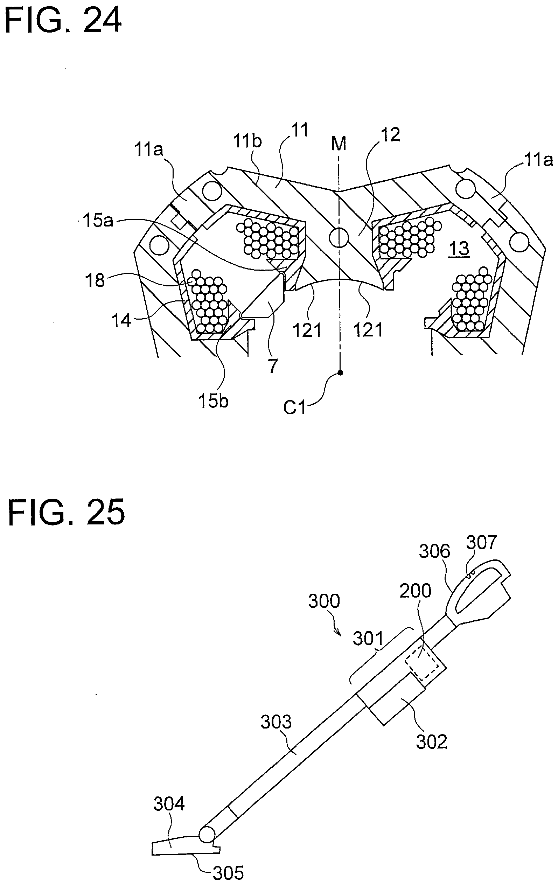

In each of the above-described Embodiments and Modifications, the tooth 12 has an asymmetrical shape, but the tooth 12 may have a symmetrical shape as illustrated in FIG. 24. In the example illustrated in FIG. 24, the tooth 12 has a shape symmetrical with respect to a straight line M in the radial direction passing through the center of the tooth 12 in the circumferential direction.

### (Electric vacuum cleaner)

An electric vacuum cleaner to which the electric blower according to any of the Embodiments and the Modifications is applicable will be described below. FIG. 25 is a schematic view illustrating an electric vacuum cleaner 300 including the electric blower 200 (FIG. 1) according to Embodiment 1.

The electric vacuum cleaner 300 includes a cleaner main body 301, a pipe 303 connected to the cleaner main body 301, and a suction portion 304 connected to an end of the pipe 303. The suction portion 304 is provided with a suction port 305 for sucking air containing dust. A dust collecting container 302 is disposed in the cleaner main body 301.

An electric blower 200 for sucking air containing dust through the suction port 305 into the dust collecting container 302 is disposed in the cleaner main body 301. The electric blower 200 has, for example, the configuration illustrated in FIG. 1. The cleaner main body 301 is provided with a gripping portion 306 to be gripped by a user, and the gripping portion 306 is provided with an operation portion 307 such as an ON/OFF switch.

When the user grips the gripping portion 306 and operates the operation portion 307, the electric blower 200 is activated and the motor 100 rotates. When the electric blower 200 is activated, suction air is produced. Thus, dust is sucked together with air through the suction port 305 and the pipe 303. The sucked dust is stored in the dust collecting container 302.

The electric vacuum cleaner 300 uses the highly reliable electric blower 200, and can therefore achieve high operation efficiency. The electric blower according to other Embodiments or Modifications may be used in place of the electric blower 200 according to Embodiment 1.

### (Hand Drier)

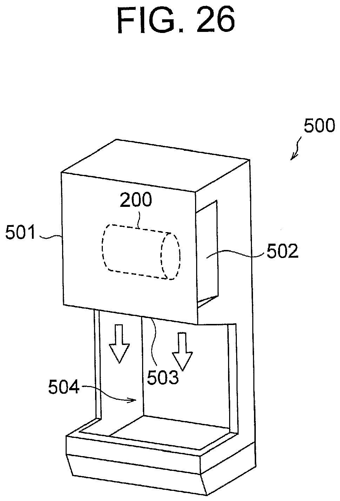

A hand drier to which the electric blower according to any of the Embodiments and the Modifications is applicable will be described below. FIG. 26 is a schematic view illustrating a hand drier 500 including the electric blower 200 (FIG. 1) according to Embodiment 1.

The hand drier 500 includes a casing 501, and an electric blower 200 fixed in the casing 501. The electric blower 200 has, for example, the configuration illustrated in FIG. 1. The casing 501 includes an air inlet 502 and an air outlet 503. The casing 501 includes, below the air outlet 503, a hand insertion portion 504 into which hands of a user are inserted. The electric blower 200 generates an airflow to suck air outside the casing 501 through the air inlet 502, and to blow the air to the hand insertion portion 504 through the air outlet 503.

When a power supply of the hand drier 500 is turned on, an electric power is supplied to the electric blower 200, and the motor 100 is driven. When the electric blower 200 is driven, air outside the hand drier 500 is sucked through the air inlet 502 and blown out from the air outlet 503. When the hands of the user are inserted into the hand insertion portion 504, water droplets attached to the hands can be blown off or evaporated by the air blown from the air outlet 503.

The hand drier 500 uses the highly reliable electric blower 200, and can therefore achieve high operation efficiency. The electric blower according to another Embodiment or Modification may be used in place of the electric blower 200 according to Embodiment 1.

### DESCRIPTION OF REFERENCE CHARACTERS

1 stator; 2 rotor; 4 motor frame; 5 first portion; 6 second portion; 7 sensor; 10, 10A, 10B, 10C, 10D stator core; 11 yoke; 11a back yoke; 11b connecting yoke; 12 tooth; 12a first side surface portion; 12b second side surface portion; 13 slot; 14 insulating portion; 15a, 15b sensor fixing portion; 16 sensor mounting surface; 17, 17B, 17C split core; 17A joint core; 18 coil; 21, 22 permanent magnet; 25 rotation shaft; 30 housing; 30a suction port; 30b exhaust port; 31 moving blade (fan); 31a vane; 32 stationary blade; 32a main plate; 32b vane; 32c air guide plate (air guide member); 33 support portion; 34 fan cover; 36 airflow resistor (air guide member); 40 peripheral wall; 41 wall; 42 hole; 44 bearing housing portion; 45 bearing; 46 sensor guide; 48 board; 51 first end portion; 52 first side portion; 61 second end portion; 62 second side portion; 71 facing surface; 72, 73 side surface; 74 back surface; 75 lead wire; 100 motor; 105 fastening recess; 106 split fitting portion; 111 separation surface; 112 thin portion (connecting portion); 113 welding surface (bonding surface); 151, 152, 161, 162 holding portion; 200, 200A, 200B, 200C electric blower; 300 electric vacuum cleaner; 301 cleaner main body; 302 dust collecting container; 303 pipe; 304 suction portion; 305 suction port; 306 gripping portion; 307 operation portion; 500 hand drier; 501 casing; 502 air inlet; 503 air outlet; 504 hand insertion portion.

## Claims

1. An electric blower (200, 200A, 200B, 200C) comprising:
a motor (100) comprising a rotor (2) having a rotation shaft (25), a stator (1) provided to surround the rotor (2), and a sensor (7) mounted on the stator (1) and facing the rotor (2);
a moving blade (31) mounted at one end side of the rotation shaft (25) in an axial direction of the rotation shaft (25);
a frame (40) housing (30) the stator (1) and having a hole (42) on a side facing the moving blade (31);
a housing (30) surrounding the frame (40);
a first air path (P1) provided between the frame (40) and the housing (30);
a second air path (P2) inside the frame (40); and
an air guide member (32c, 36) to guide an airflow generated by the moving blade (31) to the second air path (P2);
wherein each of the first air path (P1) and the second air path (P2) is an air path through which air flows in the axial direction,
wherein a sectional area of the first air path (P1) in a plane perpendicular to the axial direction is larger than a sectional area of the second air path (P2) in a plane perpendicular to the axial direction.

2. The electric blower (200, 200B, 200C) according to claim 1, further comprising a stationary blade (32) provided between the moving blade (31) and the frame (40),
wherein the air guide member (32c, 36) is an air guide plate (32c) provided on a surface of the stationary blade (32) on the frame (40) side.

3. The electric blower (200A, 200B, 200C) according to claim 1 or 2, wherein the air guide member (32c, 36) is an airflow resistor (36) provided in the first air path (P1).

4. The electric blower (200A, 200B, 200C) according to claim 3, wherein the airflow resistor (36) is a porous body.

5. The electric blower (200A, 200B, 200C) according to claim 3 or 4, wherein the airflow resistor (36) is a soundproofing material.

6. The electric blower (200, 200A, 200B, 200C) according to any one of claims 1 to 5, wherein the stator (1) has a plurality of teeth (12) arranged in a circumferential direction about a central axis (C1) of the rotation shaft (25), and
wherein a sensor fixing portion (15a, 15b) holding the sensor (7) is provided between two teeth (12) adjacent to each other in the circumferential direction among the plurality of teeth (12).

7. The electric blower (200, 200A, 200B, 200C) according to claim 6, wherein the stator (1) has coils (18) wound around the teeth (12), and coil winding members (14) provided between the teeth (12) and the coils (18), and
wherein the sensor fixing portion (15a, 15b) is formed integrally with the coil winding members (14).

8. The electric blower (200, 200A, 200B, 200C) according to claim 6 or 7, wherein the sensor fixing portion (15a, 15b) has a first portion (5) and a second portion (6) in the axial direction of the rotation shaft (25),
wherein a sectional area of the first portion (5) perpendicular to the axial direction is smaller than a sectional area of the second portion (6) perpendicular to the axial direction, and
wherein the sensor (7) is housed in the first portion (5).

9. The electric blower (200, 200A, 200B, 200C) according to claim 8, wherein the second portion (6) projects outward from the sensor (7) in a radial direction of the rotor (2).

10. The electric blower (200, 200A, 200B, 200C) according to any one of claims 6 to 9, wherein the sensor fixing portion (15a, 15b) sandwiches and holds the sensor (7) from both sides of the sensor (7) in the circumferential direction.

11. The electric blower (200, 200A, 200B, 200C) according to any one of claims 6 to 10, wherein the rotor (2) has a plurality of magnetic poles around the rotation shaft (25), and
wherein the plurality of teeth (12) of the stator (1) are equal in number to the plurality of magnetic poles of the rotor (2).

12. The electric blower (200, 200A, 200B, 200C) according to any one of claims 1 to 11, wherein the stator (1) comprises a stator core (10, 10A, 10B, 10C) having a plurality of blocks (17) combined with each other at a split surface (106), or a plurality of blocks (17A) connected to each other via a connecting portion (112).

13. An electric vacuum cleaner (300) comprising:
a suction portion (304) having a suction port (305);
a dust collecting container (302) to store dust; and
the electric blower (200, 200A, 200B, 200C) according to any one of claims 1 to 12, the electric blower (200, 200A, 200B, 200C) sucking air containing dust through the suction portion (304) into the dust collecting container (30f2).

14. A hand drier (500) comprising:
a casing (501) having an air inlet (502) and an air outlet (503); and
the electric blower (200, 200A, 200B, 200C) according to any one of claims 1 to 12, the electric blower (200, 200A, 200B, 200C) being disposed in the casing (501), sucking air through the air inlet (502), and blowing the air through the air outlet (503).

## Patentansprüche

1. Elektrisches Gebläse (200, 200A, 200B, 200C), das Folgendes umfasst:
einen Motor (100), umfassend einen Rotor (2) mit einer Drehwelle (25), einen Stator (1), der bereitgestellt ist, um den Rotor (2) zu umgeben, und einen Sensor (7), der auf dem Stator (1) angebracht und dem Rotor (2) zugewandt ist;
eine Laufschaufel (31), die an einer Endseite der Drehwelle (25) in axialer Richtung der Drehwelle (25) angebracht ist;
einen Rahmen (40), der den Stator (1) aufnimmt (30), und der ein Loch (42) auf einer Seite aufweist, das der Laufschaufel (31) zugewandt ist;
ein Gehäuse (30), das den Rahmen (40) umgibt;
einen ersten Luftpfad (P1), der zwischen dem Rahmen (40) und dem Gehäuse (30) bereitgestellt ist;
einen zweiten Luftpfad (P2) innerhalb des Rahmens (40); und
ein Luftführungselement (32c, 36), um einen von der Laufschaufel (31) erzeugten Luftstrom zu dem zweiten Luftpfad (P2) zu führen;
wobei der erste Luftpfad (P1) bzw. der zweite Luftpfad (P2) jeweils ein Luftpfad ist, durch den Luft in axialer Richtung strömt,
wobei eine Querschnittsfläche des ersten Luftpfads (P1) in einer auf die axiale Richtung senkrechten Richtung größer als eine Querschnittsrichtung des zweiten Luftpfads (P2) in einer auf die axiale Richtung senkrechten Richtung ist.

2. Elektrisches Gebläse (200, 200B, 200C) nach Anspruch 1, das außerdem eine Leitschaufel (32) umfasst, die zwischen der Laufschaufel (31) und dem Rahmen (40) bereitgestellt ist,
wobei das Luftführungselement (32c, 36) eine Luftführungsplatte (32c) ist, die auf einer Oberfläche der Leitschaufel (32) auf der Seite des Rahmens (40) bereitgestellt ist.

3. Elektrisches Gebläse (200A, 200B, 200C) nach Anspruch 1 oder 2, wobei das Luftführungselement (32c, 36) ein Luftstromwiderstand (36) ist, der in dem ersten Luftpfad (P1) bereitgestellt ist.

4. Elektrisches Gebläse (200A, 200B, 200C) nach Anspruch 3, wobei der Luftstromwiderstand (36) ein poröser Körper ist.

5. Elektrisches Gebläse (200A, 200B, 200C) nach Anspruch 3 oder 4, wobei der Luftstromwiderstand (36) ein schallisolierendes Material ist.

6. Elektrisches Gebläse (200, 200A, 200B, 200C) nach einem der Ansprüche 1 bis 5, wobei der Stator (1) eine Vielzahl von Zähnen (12) aufweist, die in Umfangsrichtung um eine Mittelachse (C1) der Drehwelle (25) angeordnet sind, und
wobei ein Sensorbefestigungsabschnitt (15a, 15b), der den Sensor (7) hält, zwischen zwei Zähnen (12) bereitgestellt ist, die in Umfangsrichtung unter der Vielzahl von Zähnen (12) nebeneinander angeordnet sind.

7. Elektrisches Gebläse (200, 200A, 200B, 200C) nach Anspruch 6, wobei der Stator (1) Spulen (18), die um die Zähne (12) gewickelt sind, und Spulenwicklungselemente (14) umfasst, die zwischen den Zähnen (12) und den Spulen (18) bereitgestellt sind, und
wobei der Sensorbefestigungsabschnitt (15a, 15b) einstückig mit den Spulenwicklungselementen (14) ausgebildet ist.

8. Elektrisches Gebläse (200, 200A, 200B, 200C) nach Anspruch 6 oder 7, wobei der Sensorbefestigungsabschnitt (15a, 15b) einen ersten Abschnitt (5) und einen zweiten Abschnitt (6) in axialer Richtung der Drehwelle (25) aufweist,
wobei eine auf die axiale Richtung senkrechte Querschnittsfläche des ersten Abschnitts (5) kleiner als eine auf die axiale Richtung senkrechte Querschnittsfläche des zweiten Abschnitts (6) ist, und
wobei der Sensor (7) in dem ersten Abschnitt (5) aufgenommen ist.

9. Elektrisches Gebläse (200, 200A, 200B, 200C) nach Anspruch 8, wobei der zweite Abschnitt (6) von dem Sensor (7) in radialer Richtung des Rotors (2) nach außen vorsteht.

10. Elektrisches Gebläse (200, 200A, 200B, 200C) nach einem der Ansprüche 6 bis 9, wobei der Sensorbefestigungsabschnitt (15a, 15b) den Sensor (7) von beiden Seiten des Sensors (7) in Umfangsrichtung sandwichartig anordnet und hält.

11. Elektrisches Gebläse (200, 200A, 200B, 200C) nach einem der Ansprüche 6 bis 10, wobei der Rotor (2) eine Vielzahl von Magnetpolen um die Drehwelle (25) herum aufweist, und
wobei die Vielzahl von Zähnen (12) des Stators (1) die gleiche Anzahl aufweist wie die Vielzahl von Magnetpolen des Rotors (2).

12. Elektrisches Gebläse (200, 200A, 200B, 200C) nach einem der Ansprüche 1 bis 11, wobei der Stator (1) einen Statorkern (10, 10A, 10B, 10C) mit einer Vielzahl von Blöcken (17), die miteinander an einer geteilten Oberfläche (106) kombiniert sind, oder einer Vielzahl von Blöcken (17A) umfasst, die über einen Verbindungsabschnitt (112) miteinander verbunden sind.

13. Elektrischer Staubsauger (300), der Folgendes umfasst:
einen Einsaugabschnitt (304) mit einer Einsaugöffnung (305);
einen Staubsammelbehälter (302), um Staub aufzunehmen; und
ein elektrisches Gebläse (200, 200A, 200B, 200C) nach einem der Ansprüche 1 bis 12, wobei das elektrische Gebläse (200, 200A, 200B, 200C) Luft, die Staub enthält, durch den Einsaugabschnitt (304) in den Staubsammelbehälter (30f2) einsaugt.

14. Handtrockner (500), der Folgendes umfasst:
ein Gehäuse (501) mit einem Lufteinlass (502) und einem Luftauslass (503); und
ein elektrisches Gebläse (200, 200A, 200B, 200C) nach einem der Ansprüche 1 bis 12, wobei das elektrische Gebläse (200, 200A, 200B, 200C) in dem Gehäuse (501) angeordnet ist, um Luft durch den Lufteinlass (502) einzusaugen und die Luft durch den Luftauslass (503) auszublasen.

## Revendications

1. Soufflante électrique (200, 200A, 200B, 200C) comprenant :
un moteur (100) comprenant un rotor (2) présentant un arbre de rotation (25), un stator (1) prévu pour entourer le rotor (2), et un capteur (7) monté sur le stator (1) et faisant face au rotor (2) ;
une aube mobile (31) montée sur un côté d'extrémité de l'arbre de rotation (25) dans une direction axiale de l'arbre de rotation (25) ;
un châssis (40) qui loge le stator (1) et présentant un trou (42) sur un côté faisant face à l'aube mobile (31) ;
un logement (30) entourant le châssis (40) ;
un premier trajet d'air (P1) prévu entre le châssis (40) et le logement (30) ;
un second trajet d'air (P2) à l'intérieur du châssis (40) ; et
un élément de guidage d'air (32c, 36) pour guider un écoulement d'air généré par l'aube mobile (31) dans le second trajet d'air (P2) ;
dans lequel chacun du premier trajet d'air (P1) et du second trajet d'air (P2) est un trajet d'air à travers lequel de l'air s'écoule dans la direction axiale,
dans laquelle une aire de section du premier trajet d'air (P1) dans un plan perpendiculaire à la direction axiale est plus grande qu'une aire de section du second trajet d'air (P2) dans un plan perpendiculaire à la direction axiale.

2. Soufflante électrique (200, 200B, 200C) selon la revendication 1, comprenant en outre une aube stationnaire (32) prévue entre l'aube mobile (31) et le châssis (40),
dans laquelle l'élément de guidage d'air (32c, 36) est une plaque de guidage d'air (32c) prévue sur une surface de l'aube stationnaire (32) sur le côté du châssis (40).

3. Soufflante électrique (200A, 200B, 200C) selon la revendication 1 ou 2, dans lequel l'élément de guidage d'air (32c, 36) est une résistance d'écoulement d'air (36) prévue dans le premier trajet d'air (P1).

4. Soufflante électrique (200A, 200B, 200C) selon la revendication 3, dans laquelle la résistance d'écoulement d'air (36) est un corps poreux.

5. Soufflante électrique (200A, 200B, 200C) selon la revendication 3 ou 4, dans laquelle la résistance d'écoulement d'air (36) est un matériau insonorisant.

6. Soufflante électrique (200, 200a, 200B, 200C) selon l'une quelconque des revendications 1 à 5, dans laquelle le stator (1) présente une pluralité de dents (12) agencées dans une direction circonférentielle autour d'un axe central (C1) de l'arbre de rotation (25), et
dans laquelle une partie de fixation de capteur (15a, 15b) supportant le capteur (7) est prévue entre deux dents (12) adjacentes l'une à l'autre dans la direction circonférentielle parmi la pluralité de dents (12).

7. Soufflante électrique (200, 200A, 200B, 200C) selon la revendication 6, dans laquelle le stator (1) présente des bobines (18) enroulées autour des dents (12), et des éléments d'enroulement de bobine (14) prévus entre les dents (12) et les bobines (18), et
dans laquelle la partie de fixation de capteur (15a, 15b) est formée d'un seul tenant avec les éléments d'enroulement de bobine (14).

8. Soufflante électrique (200, 200A, 200B, 200C) selon la revendication 6 ou 7, dans laquelle la partie de fixation de capteur (15a, 15b) présente une première partie (5) et une seconde partie (6) dans la direction axiale de l'arbre de rotation (25),
dans laquelle une aire de section de la première partie (5) perpendiculaire à la direction axiale est inférieure à une aire de section de la seconde partie (6) perpendiculaire à la direction axiale, et
dans laquelle le capteur (7) est logé dans la première partie (5).

9. Soufflante électrique (200, 200a, 200B, 200C) selon la revendication 8, dans laquelle la seconde partie (6) fait saillie vers l'extérieur à partir du capteur (7) dans une direction radiale du rotor (2).

10. Soufflante électrique (200, 200a, 200B, 200C) selon l'une quelconque des revendications 6 à 9, dans laquelle la partie de fixation de capteur (15a, 15b) enserre et supporte le capteur (7) à partir des deux côtés du capteur (7) dans la direction circonférentielle.

11. Soufflante électrique (200, 200A, 200B, 200C) selon l'une quelconque des revendications 6 à 10, dans laquelle le rotor (2) présente une pluralité de pôles magnétiques autour de l'arbre de rotation (25), et
dans laquelle la pluralité de dents (12) du stator (1) sont en nombre égal à la pluralité de pôles magnétiques du rotor (2).

12. Soufflante électrique (200, 200a, 200B, 200c) selon l'une quelconque des revendications 1 à 11, dans laquelle le stator (1) comprend un noyau de stator (10, 10A, 10B, 10C) présentant une pluralité de blocs (17) combinés les uns aux autres au niveau d'une surface divisée (106), ou une pluralité de blocs (17A) connectés les uns aux autres par l'intermédiaire d'une partie de connexion (112).

13. Aspirateur électrique (300) comprenant :
une partie d'aspiration (304) présentant un orifice d'aspiration (305) ;
un contenant de collecte de poussière (302) pour stocker de la poussière ; et
la soufflante électrique (200, 200A, 200B, 200C) selon l'une quelconque des revendications 1 à 12, aspirant de l'air contenant de la poussière à travers la partie d'aspiration (304) dans le contenant de collecte de poussière (30f2).

14. Sèche-mains (500) comprenant :
un boîtier (501) présentant une entrée d'air (502) et une sortie d'air (503) ; et
la soufflante électrique (200, 200A, 200B, 200C) selon l'une quelconque des revendications 1 à 12, étant disposée dans le boîtier (501), aspirant de l'air à travers l'entrée d'air (502), et soufflant de l'air à travers la sortie d'air (503).
